# EUROPEAN PATENT APPLICATION

(11) **EP 2 056 441 A1**
(43) Date of publication of application: **06.05.2009**
(21) Application number: 08166426.0
(22) Date of filing: 13.10.2008
(51) Int. Cl.: H02M 7/00

(54) **Semiconductor clamp system**

(30) Priority: 31.10.2007 US 931664
(71) Applicant: General Electric Company, Schenectady, NY 12345 (US)
(72) Inventor: Barr, Aaron, Greenville, SC 29615 (US); Ritter, Allen, Roanoke, VA 24014 (US); Pate, Paul, Troutville, VA 24175 (US)
(74) Representative: Bedford, Grant Richard

(57) **Abstract**

A system for clamping a plurality of semiconductors 302 that includes: 1) a first endplate 102 and a second endplate 102 that are substantially parallel and oppose each other across a predetermine distance (the predetermined distance being fixed by one or more tension members 104 that extend between the first endplate 102 and the second endplate 102); and 2) a screw jack 204 that includes a threaded cylinder that moves through a threaded opening in the first endplate 102 upon being rotated such that the threaded cylinder moves toward the second endplate 102 if rotated one direction and away from the second endplate 102 if rotated in the opposite direction.

## Description

This present application relates generally to systems for providing compression to semiconductor stacks. More specifically, but not by way of limitation, the present application relates to a rigid frame clamping system for compressing a semiconductor stack.

Semiconductors have many commercial applications, including use in power converters and industrial drives. A common semiconductor system is an integrated gate commutated thyristor ("IGCT") semiconductor (which will be used herein as an exemplary system, though the invention is so limited). IGCT semiconductors are layered devices, which generally include semiconductors stacked in series (i.e., a semiconductor stack). In operation, IGCT semiconductors require a compressive clamping force, which may be approximately 36 to 44 kN, to press the stack together so that good conductivity is achieved throughout the layers. For the semiconductor stack to operate properly, the compressive force must be applied in a precise amount and location through the stacked semiconductors.

Commercially available clamps are available for clamping semiconductor stacks. In general, such semiconductor clamps rely upon compressing the semiconductor stack by tightening nuts on a plurality of threaded rods mounted between two endplates. Specifically, the semiconductor stack is placed between the two endplates, the nuts are tightened, which draws the endplates closer together and compresses the semiconductor stack.

However, the threaded rod/nut configuration is fraught with inefficiencies. First, the compression force is not delivered in a precise manner to the stacked units. The tightening of a plurality of rods means that the compression is done in an unbalanced manner. Second, the threaded rod/nut configuration makes access and repair to the semiconductor stack difficult. To remove the stacked devices, the entire clamp assembly must be substantially disassembled, which negatively affects repair time, cost, and the required training for the service technicians. Third, the protruding rods of the rod/nut configuration impose a greater length requirement on the clamp assembly. Accordingly, space adjacent to the stack assembly must be allocated to accommodate the extension of the threaded rods.

Fourth, available clamp assemblies provide limited possibilities for component registration. As used herein, component registration refers to the mounting of semiconductor components to the clamping system such that proper alignment for compression is achieved. As one of ordinary skill in the art will appreciate, for proper operation, the IGCT semiconductors of a system must be precisely aligned along the compression axis, *i*.*e*., the axis along which compression is performed. The accompanying components, such as the water-cooled heat sinks, also must be precisely located in relation to the semiconductor, in order to adequately cool the devices. For these reasons, component registration is a significant concern, yet commercially available clamps require additional parts to be added to the clamping system for proper component registration to be achieved. Fifth, current clamps do not allow for water delivery manifolds to be directly mounted to the threaded rods of the clamp assembly.

Sixth, in operation, IGCT semiconductor systems are mounted within an enclosure via the frame of the clamp. Currently available clamps do not allow for direct mounting to the enclosure. Conventional clamps, because one of the clamping end plates must be free to move in relation to the other end plate, lack a convenient rigid structure with which to mount the system. As such, an additional component must be incorporated into the clamping device to mount the semiconductor stack within the enclosure.

Seventh, presently available clamps are only adaptable to a single semiconductor stack within one clamp, due to the plurality of the clamping rods and registration concerns. If additional stacks are desired within a single semiconductor application, an auxiliary clamp structure must be added to the assembly.

All of these factors contribute to additional cost and complexity of employing conventional clamps for use in semiconductor stacks. Thus, there is a need for an improved semiconductor clamp.

The present application thus describes in one aspect a system for clamping a plurality of semiconductors that includes: 1) a first endplate and a second endplate that are substantially parallel and oppose each other across a predetermined distance, the predetermined distance being fixed by one or more tension members; and 2) means for providing a compressive force from one of the endplates. In some embodiments, the means for providing a compressive force may include a screw jack. The screw jack may include a threaded cylinder that moves through a threaded opening in the first endplate upon being rotated. The screw jack may be rotated via a screw jack head at a first end of the screw jack. The first end of the screw jack may protrude out of an outer surface of the first end plate, and a second end of the screw jack may include a ball bearing.

The one or more tension members may include rigid rods that connect to an inner face of each of the endplates. The one or more tension members may be substantially perpendicular to each of the endplates. In some embodiments, there may be four tension members. The tension members may be located in predetermined locations based upon registering at least one of the plurality of semiconductors and a plurality of semiconductor system components along a compression axis.

The system may further include a registration bracket attached to at least one of the plurality of semiconductors and the plurality of semiconductor system components. The registration bracket may engage one of the one or more of the tension members such that the semiconductor or the semiconductor system component that is engaged by the registration bracket is fixed in the compression axis while being able to slide along the length of the one of the one or more tension members.

The system may further include a fixed registration bracket that allows for the fixed registration of one of the plurality of semiconductor system components to one of the tension members such that, when the fixed registration bracket is engaged, the semiconductor system component does not slide along the length of the tension member. The system may further include a spring washer attached to one of the endplates such that the compression of the spring washer indicates the approximate clamping force applied to the plurality of semiconductors. The system may further include mounting apertures in at least one of the endplates. The mounting apertures may include an opening through the endplate through which the system may be directly mounted to an enclosure.

Various aspects and embodiments of the present invention will now be described in connection with the accompanying drawings, in which:
FIG. 1 is a view a rigid frame of a semiconductor clamping system according to an exemplary embodiment of the present application.
FIG. 2 is a view of the rigid frame clamping system according to an exemplary embodiment of the present application.
FIG. 3 is a view of a IGCT semiconductor system within a rigid frame clamping system according to an exemplary embodiment of the present application.
FIG. 4 is a view of registration locations according to exemplary embodiments of the present application.
FIG. 5 is a view of registration locations according to exemplary embodiments of the present application.
FIG. 6 is a view of system mounting apertures according to exemplary embodiment of the present application.

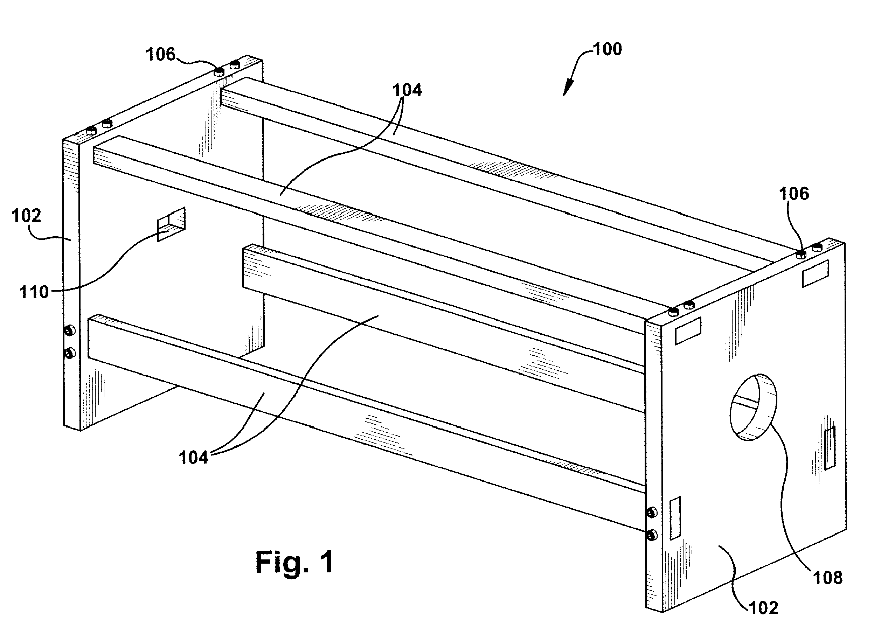

Referring now to the figures, where the various numbers represent like parts throughout the several views, Fig. 1 demonstrates a rigid frame 100 which may be used in a rigid frame clamping system according to exemplary embodiments of the present application. The rigid frame 100 may include two endplates 102 and a plurality of tension members 104. The two endplates 102 may be rectangular plates, which are parallel to and oppose each other. The plurality of tension members 104 may include four rods, each of which may have a rectangular cross-section. Those of ordinary skill in the art will appreciate that more or less tension members of different cross-sectional design may be used. The tension members 104 may rigidly connect the inner face of each of the endplates 102. The tension members 104 may be substantially perpendicular to the endplates 102. The four tension members 104 may be located at predetermined locations based upon component registration requirements as discussed in more detail below.

Each of the tension members 104 may be pinned to the endplate 102 by pins 106. Specifically, the end of the tension member 104 may insert into an opening in the endplate 102 and a pin 106 may be inserted through the edge of the endplate 104 such that the pin 106 passes through the tension member 104 and terminates in the endplate 102. Those of ordinary skill in the art will appreciate that other methods of connecting the tension member 104 to the endplate 102 also may be used.

The rigid frame 100 may be made of a rigid, non-conducting material, such as a fiberglass composite laminate, glastic engineering material, fully insulated metal or other similar material. The non-conducting quality of the material may electrically isolate all of the semiconductor components that come in contact with the rigid frame 100.

Each of the endplates 102 may include an opening through the approximate center of the endplate 102 that aligns with the central axis of the semiconductor stack. A screw jack opening 108 may be substantially circular in shape and, as discussed in more detail below, be used in conjunction with the installation of a screw jack (not shown in Fig. 1). A corresponding washer opening 110 through the opposing endplate 102 may be substantially rectangular in shape and, as discussed in more detail below, be used in conjunction with the installation of a bellville or spring washer. The positioning and quantity of the screw jack openings 108 and the washer openings 110 may vary.

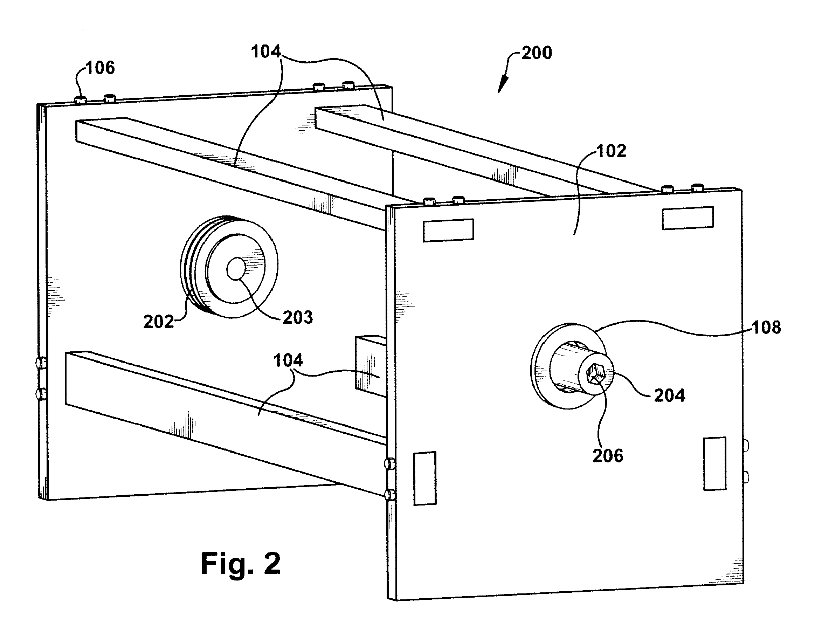

Fig. 2 demonstrates a view of a rigid frame clamping system 200. The rigid frame clamping system 200 may include the previous described rigid frame 100. The rigid frame clamping system 200 may further include a bellville or spring washer 202 (hereinafter "the bellville washer 202"). The bellville washer 202 may be any commercially available bellville or spring washer. Using the washer opening 110, the Bellville washer 110 may be attached to the endplate 102 by conventional methods. The bellville washer 202 may be constructed such that the displacement inward of its springs or coils indicates the compressive force that is acting on the bellville washer 202. At the end opposite of the end attached to the endplate 102, the bellville washer 202 may have a washer ball bearing 203.

Mounted within the screw jack opening 108 may be mechanical means for providing a compressive force into the rigid frame 100, which in some embodiments may include screw jack 204. The screw jack 204 may be a screw jack that extends inward into the rigid frame 100 (and out of the inner face of the endplate 102) upon the clockwise rotation of a screw jack head 206. The screw jack head 206 may be allen-wrench compatible, though other head configurations may be used. Those of ordinary skill in the art will appreciate that other mechanical means may be used beside the specified screw jack 204 to provide the described functionality. Similar to the bellville washer 202, at the end of the screw jack 204 that extends inward into the rigid frame 100 may be a screw jack ball bearing (not visible in Fig. 2).

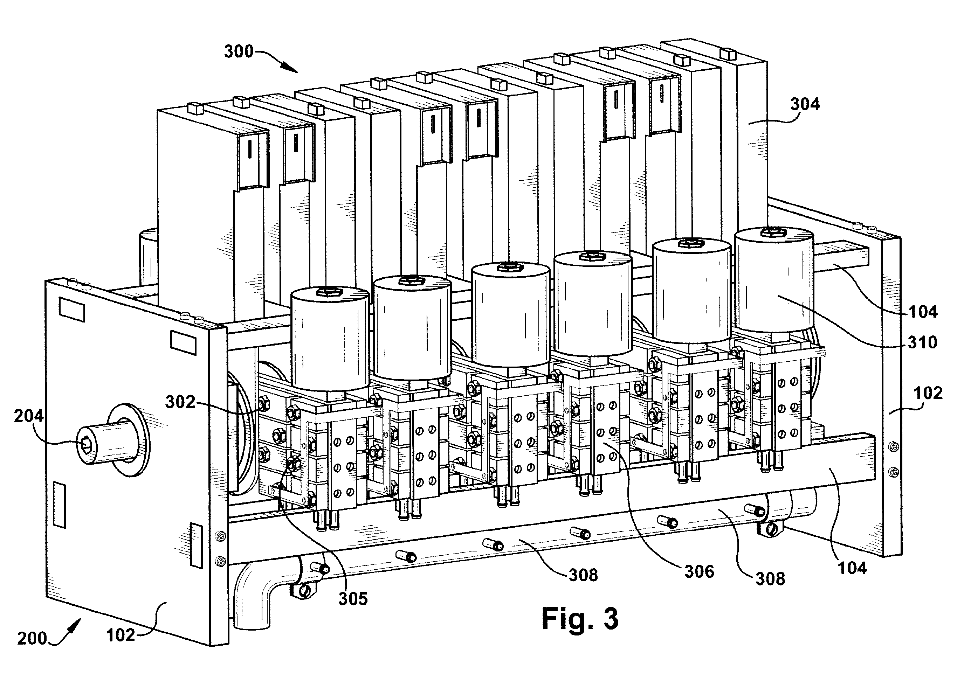

In operation, as shown in Fig. 3, an IGCT semiconductor system 300 may be housed and compressed within the rigid frame clamping system 200. As is known in the art, an IGCT semiconductor system 300 may include a series of IGCT semiconductors 302, which may be stacked in series between the screw jack 206 and the bellville washer 204. The IGCT semiconductor system 300 further may include other semiconductor components as described below. The other semiconductor system components may include a series of gate drives 304. In addition, attached to the front of the IGCT semiconductors 302 (and partially obscuring the view of the IGCT semiconductors 302) may be a plurality of power resistors 305 and heat sinks 306 attached thereto. The heat sinks 306 may remove excess heat from the system. The heat sinks 306 may be water-cooled. A supply of water may be delivered to each of the heat sinks 306 by a water deliver manifold 308. Other semiconductor system components may include a plurality of capacitors 310, which may be mounted to the top of the power resistors 305. Those of ordinary skill in the art will appreciate that the described components and their positioning may be altered and still efficiently accommodated by alternative embodiments of the present application.

The screw jack ball bearing may engage the IGCT semiconductors at one end of the stack at a preformed dimple. The washer ball bearing 203 may engage the IGCT semiconductor at the other end of the stack at a second preformed dimple. Thus engaged, the screw jack 206 may be rotated such that the screw jack 206 extends into the rigid frame 100. The distance between the endplates 102 remains fixed due to the tension members 104 such that the extension of the screw jack 206 compresses the IGCT semiconductor stack. Specifically, the extension of the screw jack 206 may place the tension member 104 in a state of tension, which may act to compress the IGCT semiconductor stack. The screw jack 206 is the only component that must be adjusted to apply an even compressive force to the semiconductor stack. As the IGCT semiconductor stack is compressed, the bellville washer 202 may be compressed. The compression of the bellville washer 202 will cause it to deflect inward. The extent of the deflection may be used to calibrate the amount of compressive force applied to the semiconductor stack. In this manner, a known compressive force may be evenly applied to the semiconductor stack at precise points.

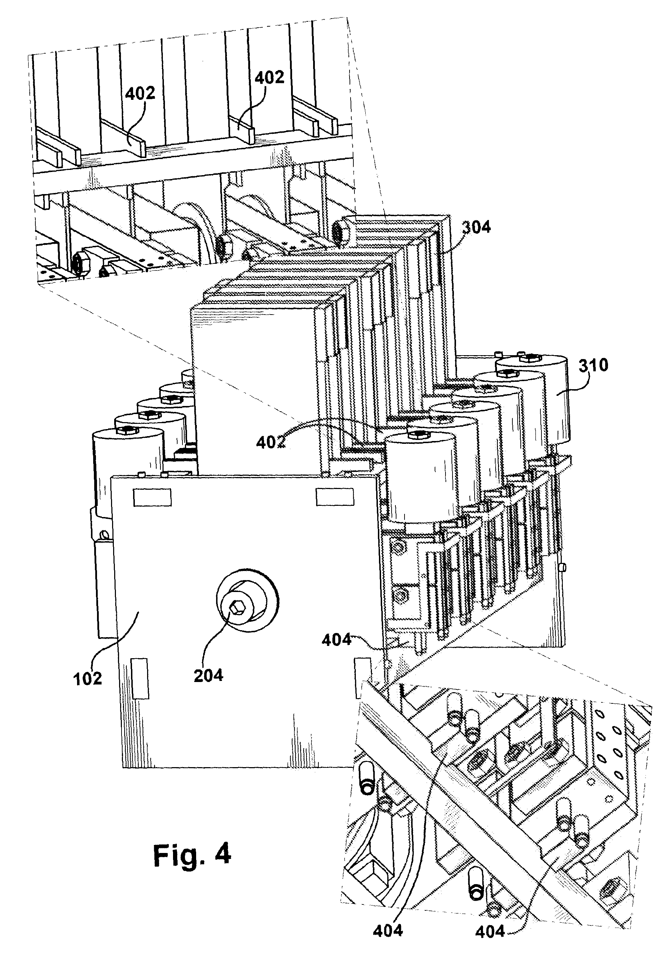

As shown in the exemplary embodiments of Figs. 1, 2 and 3, the tension members 104 may be positioned to substantially equalize and balance the compressive load and allow for efficient registration locations for the component parts of the IGCT semiconductor system 300. Specifically, the tension members 104 may be positioned such that the components of the IGCT semiconductor system 300 may be aligned in the correct position along the compression axis by registering themselves directly to the tension members 104. Fig. 4 provides examples of this functionality. As shown in blown-up section in top-left corner of Fig. 4, gate drive registration brackets or registration brackets 402 may register the gate drives 304 to the rigid frame 100. Specifically, each of the gate drives 304 may have two gate drive registration brackets 402 on each of its sides. The gate drive registration bracket 402 may include any type of bracket that fixes the gate drive 304 to the tension member 104 in a predetermined location along the compression axis, while still allowing the gate drive 304 to slide back and forth along the tension member 104. In some embodiments, the gate drive registration bracket 402 may include a "C" shaped bracket that may engage the tension member 104. This design may allow the gate drive 304 to be fixed in relation to the compression axis and still slide along the tension member 104.

In similar fashion, the other components of the IGCT semiconductor system 300 may be registered onto the rigid frame 100. For example, as demonstrated in the other blown-up section of Fig. 4, heat sink or fixed registration brackets 404 may register the heat sinks 306 to the rigid frame 100. Each of the heat sinks 306 may have a single or multiple fixed registration brackets 404 on a bottom surface. In this manner, the heat sinks 306 may sit on one of the tension member 104, thus being aligned and fixed into place in relation to the compression axis. The heat sink registration bracket 402 may include any type of bracket that fixes the gate drive 304 to the tension member 104 (i.e., fixed into place along the compression axis), while still allowing the heat sink 402 to slide back and forth along the tension member 104. As shown in Fig. 4, the heat sink registration bracket 404 may include a bracket with a slot into which a side of the tension member 104 may insert. The fit between the tension member 104 and the slot may be a snug one.

Given the registration of the components as described above, installation of the component parts of the IGCT semiconductor system 300 in the rigid frame clamping systems 200 may be completed in an efficient manner. For example, to install the components, the pins 106 of one of the endplates 102 may be removed such that the endplate 102 is disconnected from the tension members 104. With the ends of the tension members 104 free at one end, the gate drive 304, for example, may be installed by sliding the gate drive registration brackets 402 onto the two relevant tension members 104. In some embodiments, the gate drive 304 may have two gate drive registration brackets 402 on each of its sides. Each of the relevant tension members 104 may be inserted into the slot of the gate drive registration bracket 402 and the gate drive 304 may slide down the tension members 104 into position. With the predetermined positioning of the tension members 104, the gate drives 304 may be supported, and fixed in the appropriate position along the compression axis, as shown.

To take another example, the heat sinks 306 (and related hardware) may be installed in much the same manner. In addition, if one of the heat sinks 306 is part of a pre-assembled unit of semiconductor components, which may include, for example, the gate drive 304, the IGCT semiconductor, and other components, the pre-assembled unit may be efficiently installed at once by engaging the brackets to the relevant tension members 104 and sliding the unit down the tension members 104 into position. In this manner, the components may be efficiently installed while fixing their position along the compression axis.

Access to components already installed in the IGCI semiconductor system 300 also is enhanced. The compression force of the rigid frame clamping system 200 may be released simply by turning the screw jack 206 in the counter-clockwise direction. Once the clamp released, the components may slide lengthwise along tension members to either be removed or spread out, which may allow for convenient removal, replacement or repair of any of the component parts.

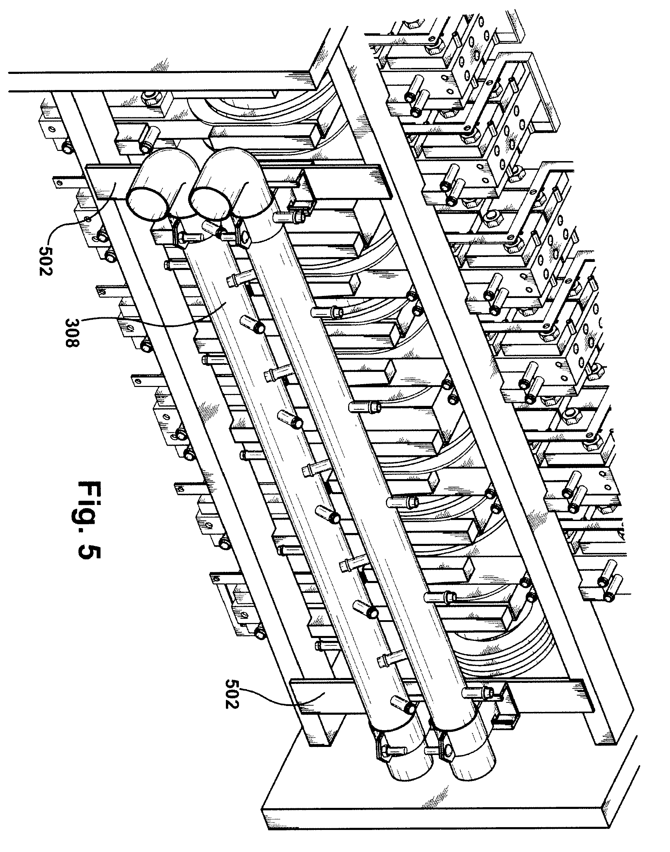

Because the tension members 104 are rigid and do not change position in relation to the endplates 104 (as conventional clamps do), some of the components may be fixed to the tension members 104 (i.e., fixed in such a manner that the component is not allowed to slide along the length of the tension member 104). An example of a component that may be registered in this manner is the water delivery manifolds 308, which, as illustrated in Fig. 5, may be fixed to the bottom of the rigid frame clamping system 200. The water delivery manifolds 308 may be attached by conventional methods to crosspieces 502. Each end of the cross piece 502 may attach to one of the tension members 104. Further, because of the nature of the water delivery manifold component 308 (i.e., because the water delivery manifold 308 does not have to be aligned and compressed along the compression axis), this type of registration may be effective. Because the tension members 104 are rigid and do not change position in relation to the endplates 102, this type of registration may be possible. The registration of the water delivery manifolds 308 in this manner may allow for them to the conveniently replaced or repaired, while remaining an integral part of the IGCT semiconductor system 300.

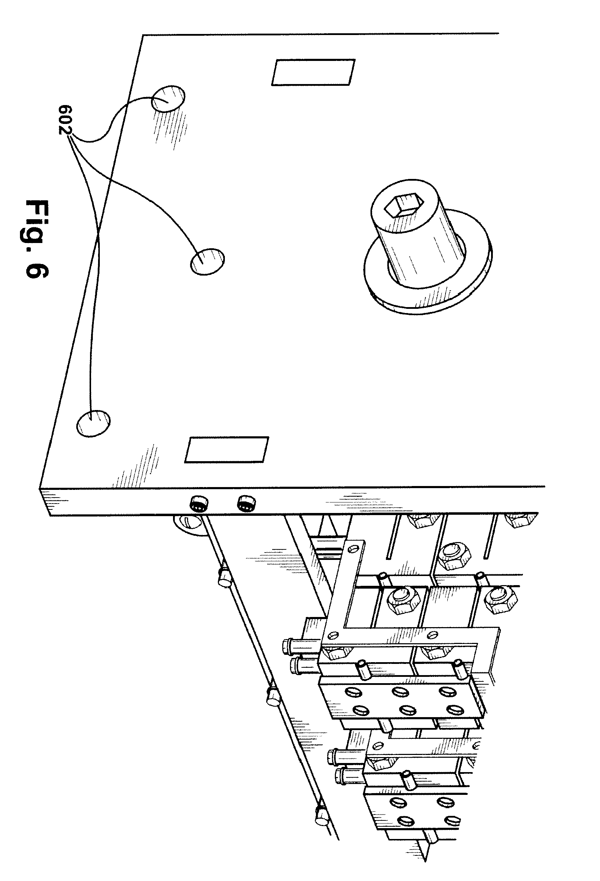

Fig. 6 illustrates system mounting apertures 602 in one of the endplates 102. Because the position of the endplates 102 in relation to each other does not change (which is different than the rod/nut assembly of known systems), the endplates 102 may be conveniently mounted directly to a system enclosure (not shown) without specialized hardware. As such, the end plates may be directly mounted to the enclosure using standard hardware and procedures. Mounting may be done by bolting or pinning the endplates 102 via the system mounting apertures 602 directly to the enclosure.

It should be apparent that the foregoing relates only to the described embodiments of the present application and that numerous changes and modifications may be made herein without departing from the spirit and scope of the application as defined by the following claims and the equivalents thereof.

## Claims

1. A system for clamping a plurality of semiconductors (302), the system comprising:
a first endplate (102) and a second endplate (102) that are substantially parallel and oppose each other across a predetermined distance, said predetermined distance being fixed by one or more tension members (104); and
means for providing a compressive force from one of the endplates (102).

2. The system of claim 1, wherein the means for providing a compressive force includes a screw jack (204), the screw jack (204) comprising a threaded cylinder that moves through a threaded opening in the first endplate (102) upon being rotated.

3. The system of any preceding claim, wherein the screw jack (204) is rotated via a screw jack head (206) at a first end of the screw jack (204), said first end of the screw jack (204) protruding out of an outer surface of the first end plate (102); and
wherein a second end of the screw jack (204) comprises a ball bearing (203).

4. The system of any preceding claim, wherein the one or more tension members (104) comprise rigid rods that connect to an inner face of each of the endplates (102), said one or more tension members (104) being substantially perpendicular to each of the endplates (102).

5. The system of any preceding claim, wherein the one or more tension members (104) comprise four tension members.

6. The system of any preceding claim, wherein the tension members (104) are located in predetermined locations based upon registering at least one of the plurality of semiconductors (302) and a plurality of semiconductor system components along a compression axis.

7. The system of any preceding claim, further comprising a registration bracket (402) attached to at least one of the plurality of semiconductors (302) and the plurality of semiconductor system components, said registration bracket (402) engaging one of the one or more of the tension members (104) such that the semiconductor (302) or the semiconductor system component that is engaged by the registration bracket (402) is fixed in the compression axis while being able to slide along the length of the one of the one or more tension members (104).

8. The system of any preceding claim, further comprising a fixed registration bracket (404) that allow for the fixed registration of one of the plurality of semiconductor system components to one of the tension members (104) such that, when the fixed registration bracket (404) is engaged, the semiconductor system component does not slide along the length of the tension member (104).

9. The system of any preceding claim, further comprising a spring washer (202) attached to one of the endplates (102) such that the compression of the spring washer (202) indicates the approximate clamping force applied to the plurality of semiconductors (302).

10. The system of any preceding claim, further comprising mounting apertures (602) in at least one of the endplates (102), said mounting apertures (602) comprising an opening through the endplate (102) through which the system may be directly mounted to an enclosure.
